# EUROPEAN PATENT APPLICATION

(11) **EP 4 346 046 A1**
(43) Date of publication of application: **03.04.2024**
(21) Application number: 22198496.6
(22) Date of filing: 28.09.2022
(51) Int. Cl.: H02J 3/28, H02J 15/00

(54) **WIND TURBINE AND METHOD FOR OPERATING A WIND TURBINE**

(71) Applicant: Siemens Gamesa Renewable Energy A/S, 7330 Brande (DK)
(72) Inventor: Eggers, Jan Rudolf, 21640 Bliedersdorf (DE)
(74) Representative: SGRE-Association

(57) **Abstract**

Wind turbine, comprising a rotor, a generator (6) driven by the rotor for producing energy, and an energy conversion device (7) comprising at least one energy conversion module (10) operatable both in an electrolyzer mode to produce hydrogen by electrolyzing water using energy provided by the generator (6) in a first operational mode of the wind turbine (1) and in a fuel cell mode to produce energy by reacting hydrogen and oxygen in a second operational mode of the wind turbine (1), wherein the energy conversion module (10) is switchable between the electrolyzer mode and the fuel cell mode.

## Description

The invention refers to a wind turbine, comprising a rotor and a generator.

Wind turbines are commonly used to produce electric energy. The wind turbine comprises several rotor blades arranged at a hub, which hub is connected to a generator. Wind interacting with the turbine blades makes the hub rotate, thereby driving the generator which produces electric energy. Such wind turbines are arranged either offshore or onshore. The wind turbine is connected to an electric power grid by means of connecting cables for supplying the produced electric power. As a wind turbine is not always in operation, for example due to lull or wind farm curtailment, the generator is not driven and therefore no electric power is produced. Nevertheless, a lot of consumer systems of the wind turbine need electric power, like control systems, rotor or blade rotation devices, safety equipment, lights, venting and cooling systems and other electric systems. This auxiliary power is usually provided by the power grid to which the wind turbine is connected.

Recently, wind turbines are proposed, which additionally comprise an energy conversion device for producing hydrogen by electrolyzing water using the electric power respectively energy produced by the generator. The electric power produced by converting the wind energy is, in a second step, converted into hydrogen as an energy carrier medium by electrolyzing water, for example seawater in case of offshore arrangements. This is advantageous, as no electric power needs to be transported from the wind turbine to a power grid, so that no electric cables need to be laid for example at the seabed in case of offshore arrangements or on ground in case of onshore arrangements, as such electric cables are very expensive. Instead, a gas pipeline for transporting the produced hydrogen to a gas grid is necessary, which pipeline is less cost effective and easier to be laid. In an alternative, the hydrogen may also be liquified and transported by ship in case of offshore arrangements or even onshore arrangements. But also in such a turbine embodiment, where the produced electric power is converted again to produce hydrogen, the power and gas production may be interrupted due to lull or other constraints. Nevertheless, also such a wind turbine comprises a number of electric consumers which need some auxiliary power. As no electric cable connection is given, the electric power may be provided by large battery arrangements provided at the wind turbine. Batteries however are heavy and expensive, especially as they need to be scaled appropriately to run all the electric consumer systems of the wind turbine. Furthermore, such a battery system needs additional space, which is quite rare at a wind turbine especially in offshore applications. Finally, the battery system is only an auxiliary system, which is only used at rare opportunities, making the installation of such a battery system highly questionable.

It is an object of the invention to provide an improved wind turbine.

For addressing the object, the invention proposes a wind turbine, comprising a wind turbine having a rotor, a generator driven by the rotor for producing energy, and an energy conversion device comprising at least one energy conversion module operatable both in an electrolyzer mode to produce hydrogen by electrolyzing water using energy provided by the generator in a first operational mode of the wind turbine and in a fuel cell mode to produce energy by reacting hydrogen and oxygen in a second operational mode of the wind turbine, wherein the energy conversion module is switchable between the electrolyzer mode and the fuel cell mode.

The invention proposes a wind turbine, which is equipped with an energy conversion device, which device comprises at least one energy conversion module which is operatable in two different modes, i.e. an electrolyzer mode, in which the module produces hydrogen by using the electric energy provided by the generator, and a fuel cell mode, in which the module produces electric energy from previously produced hydrogen and oxygen. The module is reversable, it can be switched between the electrolyzer mode and the fuel cell mode and vice versa, controlled by a respective control device which controls the operational mode e.g. based on information regarding the power generation of the generator etc.

As the energy conversion device respectively the energy conversion module is operatable in the two different modes, it can produce electric energy, when wind is blowing and no other constraints are given which would affect the regular wind turbine operational mode. In case of any constraints, for example lull or wind farm curtailments or any other reason, which prevent the production of electric energy, the energy conversion module can be simply switched to the fuel cell mode. The module is now operatable to produce the needed electrical auxiliary energy from previously produced hydrogen and previously produced oxygen, both previously produced by the electrolyzation of water. In an alternative to using the produced oxygen, also oxygen in the ambient air can be used, which avoids to store the produced oxygen. This electric energy is now used to run the respective consumer systems of the wind turbine, preferably in combination with one or more smaller buffer batteries or one or more supercapacitors, which provide the initial starting current for the switching of the mode and e.g. for the rotating equipment, when the turbine shall restart. By installing such a reversable energy conversion device respectively reversable energy conversion module, which can be run in either the electrolyzer mode or the fuel cell mode, as need be, the wind turbine is in regard of electric power self-sufficient. When the wind turbine operates in the regular first operational mode, electric power is produced by the generator, which power is certainly also used to run all consumer systems of the wind turbine. And when the wind turbine operates in a second operational mode, in which no electric power is produced by the generator, the energy conversion module provides the necessary auxiliary power for running all systems of the wind turbine without the need for any external electric energy, or without the need for installing a large scale battery buffer system. In case the wind turbine started operation but the generator does not yet cover the entire load of the auxiliary systems, then both systems could provide electric energy, so that both systems, i.e. the generator and the conversion device respectively the switchable conversion module contribute to producing electricity.

The inventive wind turbine therefore not only avoids the use of expensive electric cables, as it produces hydrogen as an energy carrier, but is also a self-sufficient arrangement, as by simply reversing the operational mode of the energy conversion module the needed auxiliary electrical power is produced. This power production is based on the previously produced hydrogen and either oxygen present in the air or also produced during the electrolyzing process, in which water is split into hydrogen and oxygen.

The central feature of the invention is the switchable energy conversion device respectively conversion module, which is reversable in its operational mode. Various module types working with specific electrolyzing methods may be used. The module may for example be a proton exchange membrane water electrolyzer (PEMWE), and alkaline water electrolyzer (AWE), an anion exchange membrane water electrolyzer (AEMWE), a solid oxide electrolysis cell (SOEC) or a proton conducting ceramic electrolyser (PCCEL). This enumeration is not restricting. All these types of specific electrolyzer devices or modules may be used as a reversable module, which can be switched in the inventive way to either produce hydrogen or electric power. The stack may comprise only modules of the same type, but also modules of different types.

As mentioned, the need for auxiliary electric power is only given at rare occasions. Therefore, also the energy conversion module runs very seldom in the fuel cell mode. It is therefore, according to a further embodiment of the invention, advantageous, when the energy conversion device comprises one or more energy conversion modules which are only operatable in the electrolyzer mode and at least one energy conversion module operatable in both modes. The amount of energy needed in the idle mode, i.e. the second operational mode of the wind turbine, is much less than the system can produce hydrogen in the regular first operational mode. Therefore, the energy conversion device is scaled such that it yields on a very high hydrogen production rate, using a respective number of both energy conversion modules which are only operatable in the electrolyzer mode and which are reversible. The comparable small amount of auxiliary electric energy is provided by the at least one specific energy conversion module operatable in both modes. So, when the wind turbine runs in the first operational mode, in which electric energy is produced, all energy conversion modules operate in the production mode and produce hydrogen. But in case of lull or other constraints, when no electric energy is produced, only the at least one energy conversion module, which is operatable also in the fuel cell mode, is working, as this module produces enough auxiliary energy for running all consumer systems of the wind turbine in this situation. The module stack may for example comprise ten energy conversion modules. Nine of these modules are only operatable in the electrolyzer mode and are of the same module type, but only one module is a reversable module, which may be of the same type as the nine modules or of another type. This is certainly only an example, this scaling may certainly be different, depending on the amount of electric power produced by the generator, which needs to be converted into hydrogen, and the amount of auxiliary electric power needed.

As mentioned, the energy conversion module reconverts the previously produced hydrogen to electric energy, preferably with also the previously produced oxygen or with oxygen present in the air. There are various options, where the hydrogen used for this reconversion comes from. According to a first embodiment, a hydrogen storage for storing at least a certain amount of hydrogen produced in the electrolyzer mode is provided, from which storage the hydrogen is supplied to the energy conversion module when working in the fuel cell mode. The turbine is provided with a specific hydrogen storage, in which some hydrogen is buffered, which is only used in case auxiliary electric power is needed. The hydrogen may either be provided from the storage to the energy conversion module by means of a pump, but preferably the hydrogen is stored in the hydrogen storage with an appropriate pressure of at least 20 bar or preferably more, so that the gaseous hydrogen is provided to the module due to the high pressure, so that no pump is needed.

The hydrogen storage itself is preferably provided at the wind turbine. Such a storage, in which the pressurized hydrogen gas is stored, can easily be arranged for example in the wind turbine tower or at another appropriate position and can simply be connected to the energy conversion module by means of a gas pipe. The storage itself is a simple gas storage, adapted to store the pressurized hydrogen. This storage arrangement is especially advantageous, when the hydrogen is for example transported by ship from the turbine to the shore or the like. But certainly, also when a hydrogen gas pipeline is provided, such a hydrogen storage at the turbine may be provided.

If such a hydrogen storage is provided at the turbine, it is also possible that a subsequent processing device for processing the produced hydrogen into another gaseous product is provided. According to this embodiment, the wind turbine is a power-to-X-arrangement, meaning that the produced electric power is not only converted to hydrogen, but the hydrogen can be converted into another product, like methane, methanol, ammonia (liquid or gaseous) or even fuel for a combustion engine or the like. In this case, when the hydrogen is subsequently processed into another product, a hydrogen storage is advantageous for buffering a certain amount needed to produce auxiliary electric energy.

In another embodiment of the invention, alternative to the arrangement of a hydrogen storage at the wind turbine, the energy conversion module may also be adapted to operate in the fuel cell mode using hydrogen produced in the electrolyzer mode from a hydrogen gas pipeline coupled to the wind turbine. If the wind turbine is coupled to a hydrogen gas pipeline, the produced hydrogen is pumped into the pipeline with high pressure, usually a pressure of approximately 20 - 80 bar. In the pipeline therefore high pressurized hydrogen is present. If now the wind turbine is in a situation, in which no electric power is produced by the generator, but auxiliary electric power is needed, the module is switched to the fuel cell mode, in which the hydrogen may simply be received from the pipeline. Due to the high gas pressure in the pipeline, the hydrogen automatically powers the energy conversion module, which can now reconvert the hydrogen by reacting it with oxygen to generate electric power. In this embodiment, no specific pump or the like for providing the hydrogen to the module is needed, just like in the embodiment with the hydrogen storage, in which the hydrogen is also buffered in the pressurized state.

As previously mentioned, the wind turbine may not only produce hydrogen, but may be a power-to-X-turbine having a subsequent processing device for producing another product based on the produced hydrogen. The previously described wind turbine arrangement may comprise a hydrogen storage, from which hydrogen is taken in order to produce auxiliary electric power if needed. According to an alternative, an inventive wind turbine arrangement may again comprise a subsequent processing device for processing the produced hydrogen into another product. This embodiment additionally comprises a transformation device for transforming the product back into hydrogen, which hydrogen operates the energy conversion module in the fuel cell mode. In this embodiment the wind turbine is equipped with the transformation device for retransforming the produced product like ammonia, methanol, methane etc. back into hydrogen, which hydrogen is then reconverted into electric power by the energy conversion module. In this case, no specific hydrogen storage is needed.

The product produced by the subsequent processing device may be stored in a product store at least to a certain amount, from which product storage the product is supplied to the transformation device to produce hydrogen for operating the energy conversion module in the fuel cell mode. According to this embodiment, an additional product storage is provided at the turbine. In an alternative the transformation device may also be adapted to produce hydrogen using the produced product from a product gas or liquid pipeline coupled to the wind turbine. Just like in the previously described embodiment, where the hydrogen is used from a hydrogen gas pipeline for running the energy conversion module, also in this embodiment the product is taken from a product gas or liquid pipeline which is coupled to the wind turbine for running the transformation device. Also, here the product gas is present in the gas pipeline at a high pressure, again of for example 20 - 80 bar, while the product liquid is pumped back from the liquid pipeline to the transformation device.

The wind turbine arrangement itself may be an offshore arrangement. The turbine is installed at sea, and may for example, but preferably, be coupled to the shore via a gas pipeline, in which, depending on the setup of the wind turbine arrangement, either the hydrogen or the other gaseous or liquid product is supplied. But also an onshore arrangement is feasible. In this embodiment the wind turbine is arranged on the ground and preferably connected to a pipeline. In this onshore embodiment the water used in the electrolyzer device may be drinking water or, when the wind turbine is closed to the sea, also seawater.

A buffer system comprising some small batteries or supercaps for providing a backup power, especially for switching the switchable module, may further be provided. This buffer system provides the initial power for switching the mode of the reversible module.

The invention further refers to a method for operating a wind turbine having a rotor, a generator driven by the rotor for producing energy, and an energy conversion device comprising an energy conversion module, which energy conversion module is operated in an electrolzyer mode producing hydrogen by electrolyzing water using energy provided by the generator in a first operational mode of the wind turbine and is switched to a fuel cell mode producing energy by reacting hydrogen and oxygen when the generator generates no or not sufficient energy in a second operational mode of the wind turbine.

The hydrogen used in the fuel cell operational mode may be provided from a hydrogen storage in which at least a certain amount of hydrogen produced in the electrolyzer mode is stored. In an alternative embodiment the hydrogen may also be supplied from a hydrogen pipeline coupled to the wind turbine.

According to another embodiment a subsequent processing device for processing the produced hydrogen into another gaseous or liquid product and a transformation device for transforming the product back into hydrogen is provided, wherein hydrogen is produced by the transformation device for operating the energy conversion module in the fuel cell mode. In this embodiment a double energy conversion is performed from electric energy to hydrogen to the product, and vice versa for producing auxiliary electric power.

At least a certain amount of the product produced by the subsequent processing device may be stored in a product storage, from which product storage the product is supplied to the transformation device to produce hydrogen for operating the energy conversion module in the fuel cell mode. In an alternative to such a product storage respectively a product tank, the product may also be provided via a product gas or liquid pipeline coupled to the wind turbine to the transformation device.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a principle illustration of an inventive wind turbine of a first embodiment,
- Fig. 2: a principle illustration of an inventive wind turbine of a second embodiment comprising a hydrogen storage,
- Fig. 3: a principle illustration of an inventive wind turbine of a third embodiment comprising a subsequent processing device and a transformation device, and
- Fig. 4: a principle illustration of an inventive wind turbine of a fourth embodiment comprising an additional product storage.

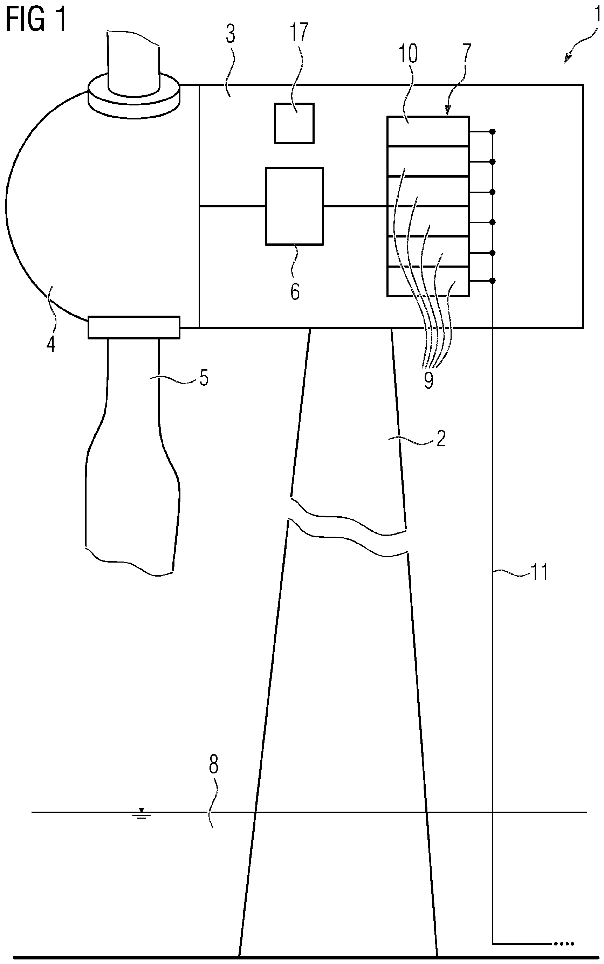

Fig. 1 shows an inventive wind turbine 1 comprising a tower 2 on top of which a nacelle 3 is arranged. The nacelle 3 comprises a hub 4 to which several rotor blades 5 are attached. The hub 4 will rotate, when wind interacts with the blades 5. The hub 4 is coupled with a generator 6, either directly or via a gearbox, which generator produces electric energy when driven by the rotating hub 4.

The generator 6 is coupled to an energy conversion device 7, which is designed to produce hydrogen by electrolyzing water, in this embodiment seawater 8 pumped to the energy conversion device 7, as the wind turbine 1 is an offshore installation. The seawater may be processed by a purification system before it is supplied to the energy conversation device. The energy conversion device is coupled to the generator 6, who provides the electric power necessary for electrolyzing the water.

The energy conversion device 7 comprises a number of energy conversion modules 9, which are solely capable of electrolyzing water, they are therefore only operatable in an electrolyzer mode.

The energy conversion device 7 further comprises in this example one energy conversion module 10, which is a conversion module operatable in two different modes. It operates in an electrolyzer mode, in which it is capable of electrolyzing the water 8, just like the energy conversion modules 9. But the energy conversion module 10 is also operatable in a second fuel cell mode, in which the energy conversion module 10 works as a fuel cell with a reversed operational process. In this fuel cell mode the energy conversion module 10 produces electric energy by using previously produced hydrogen, which is produced by all modules 9, 10, which hydrogen reacts with oxygen for producing electric power, as known from the working principle of a fuel cell. Also the oxygen is previously produced or air is used to provide the oxygen. The mode of the energy conversion module 10 can be reversed by switching, if need be, so that, whenever additional electric power is needed, this electric power can be supplied only by operating the energy conversion module 10 in the fuel cell mode. This auxiliary electric power may be needed when the conditions have changed such that the hub cannot rotate, either due to lull or for example constraints arising from a multi turbine field in which the inventive wind turbine 1 is integrated or the like. In this situation a large number of electric appliances of the wind turbine 1 like control systems, rotor or blade rotation devices, lights, safety equipment, venting and cooling system and other electric consumers still need to work, albite the generator 6 does not produce electric power. In this situation the energy conversion module 10 is switched to the fuel cell mode, so that the auxiliary electric power is provided during this period of time until the wind turbine 1 returns to the first operational mode, the regular mode where the hub 4 rotates and the generator 6 produces electric power.

The energy conversion device 7 respectively all modules 9, 10 are connected to a hydrogen pipeline 11, which runs to the shore for transporting the produced hydrogen to a pipeline grid onshore. From this pipeline 11 the energy conversion module 10 is supplied with hydrogen when switched to the fuel cell mode. The hydrogen in the pipeline 10 is highly pressurized, with a gas pressure of approximately 20 - 80 bar, so that a backflow for supplying the hydrogen to the module 10 is easily possible.

A control device 17 is shown, which controls the operation of the respective items. It receives the information about the power generation from the generator and auxiliary systems and controls the energy conversion device respectively the reversible module accordingly, so that the operational mode is switched when needed.

Certainly, respective valves and control devices etc. are provided in order to control the respective gas flow etc., although not explained in detail.

The energy conversion device 7 is designed to yield a high hydrogen output, so that a certain number of first modules 9 which only produce hydrogen are provided. It is sufficient to provide only one or a few "double function" modules 10 which is switchable between the electrolyzer mode and the fuel cell mode, as the amount of electric power needed to run and maintain all necessary systems during a lull or other interruption of the generator production is remarkably lower than the electric energy produced by the generator when it runs in the regular operation mode. Therefore, it is sufficient to provide only a small capacity of fuel cell mode, just enough to produce sufficient auxiliary electric power. During the operation of the module 10 all modules 9 are certainly inactive, as they are not supplied with electric power from the generator 6. But it is certainly also possible to provide only modules which are of the reversible type in the stack, so that the whole module stack can be switched between both modes if need be.

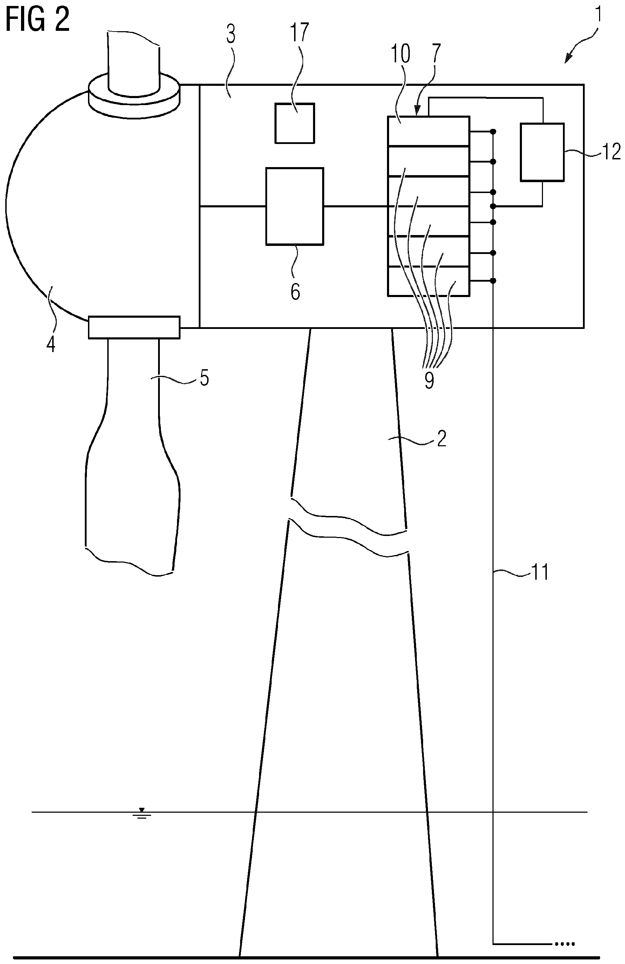

Fig. 2 shows a second embodiment of an inventive wind turbine 1. The same reference numbers apply for the same items. Also, this turbine 1 comprises a tower 2 and a nacelle 3 with a hub 4 and rotor blades 5. The nacelle 3 comprises a generator 6 and an energy conversion device 7 comparable to the one from fig. 1. This energy conversion device 7, again, comprises a number of energy conversion modules 9 which only produce hydrogen, they are only operatable in an electrolyzer mode. The device 7 further comprises one energy conversion module 10, which is operatable in an electrolyzer and a fuel cell mode and switchable between these modes.

In this embodiment, again, all modules 9, 10 are coupled to a hydrogen pipeline 11, the produced hydrogen is fed to the pipeline 11 to be delivered to the hydrogen grid. Different to the embodiment of fig. 1, the double-functional energy conversion module 10 is not supplied with hydrogen from the pipeline 11, when it is operated in the fuel cell mode when auxiliary electric energy is needed. In the embodiment of fig. 2 an additional hydrogen storage 12 is provided, which is supplied with hydrogen until it reaches a certain filling level. The hydrogen is preferably stored in the storage 12 under pressure, again preferably a pressure between 20 - 80 bar. A small compressor may be coupled to the storage in combination with a pressure regulating valve in the return direction. From the hydrogen storage 12 the module 10 is supplied with hydrogen, if need be, wherein also here no additional pump is necessary due to the pressurized storage of the hydrogen. Again, a certain number of valves and control devices etc. are provided to control the respective gas flow and operations.

The working principle is the same as described to fig. 1. When the hub 4 does not rotate and the generator 6 is not driven, no electric power is produced, all modules 9 are inactive. Only the module 10 is active and switched to the fuel cell mode, in which it converts previously produced hydrogen from the storage 12 by reacting it with oxygen, which oxygen is also previously produced (and eventually stored in a separate oxygen storage) due to the electrolyzation of the water, or which oxygen is present in the air, to produce electric energy.

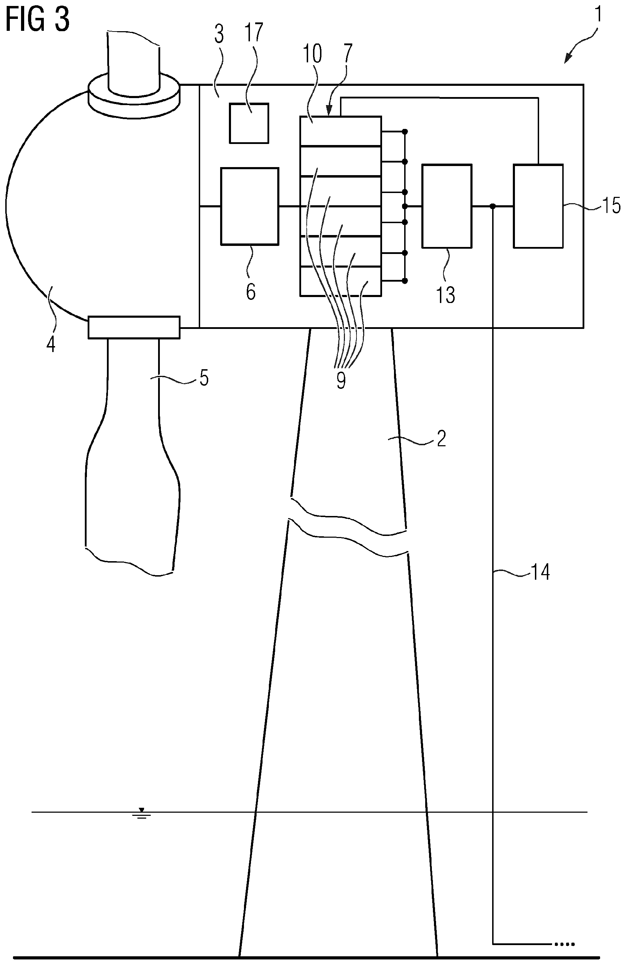

Fig. 3 shows an embodiment of an inventive wind turbine 1, with a tower 2, a nacelle 3, a hub 4, blades 5 and a generator 6, to which an energy conversion device 7 comprising a number of mono functional electrolyzing energy conversion modules 9 and a double functional energy conversion module 10 is coupled. This wind turbine 1 is a power-to-X-turbine, in which not only hydrogen is produced by the energy conversion device 7, but another final product which is produced by using the produced hydrogen. In this embodiment a subsequent processing device 13 is provided, which subsequent processing device 13 produces another product by using the hydrogen produced in the energy conversion device 7. Such a product may for example be ammonia, methanol, methane or for example a fuel for running a combustion engine or the like. The processing device 13 certainly is adapted to perform the respective chemical reactions and is provided with respective additional substances for performing the respective chemical reactions etc., depending of what kind of product shall be produced.

The subsequent processing device 13 is coupled to a product pipeline 14, which, just like the hydrogen pipeline 11, runs to the shore for distributing the produced gaseous or liquid product to the subsequent product pipeline grid.

In order to allow the energy conversion module 10 to produce auxiliary electric energy, again based by reversing it to the fuel cell mode, it is necessary to supply hydrogen to the module 10, which can react with oxygen. But the hydrogen is already converted to the product by the processing device 13. Therefore, a transformation device 15 is provided, which is, when necessary, supplied with the product previously produced in the processing device 13, for example ammonia gas or the like. The transformation device, a reformer or comparable device, transforms the product back into hydrogen and whatever other gas, depending on the product. The hydrogen is then fed to the module 10, which is connected to the transformation device 15 as shown in fig. 3. Again, respective valves, control devices and other necessary items are certainly provided to control the respective gas flows and processes.

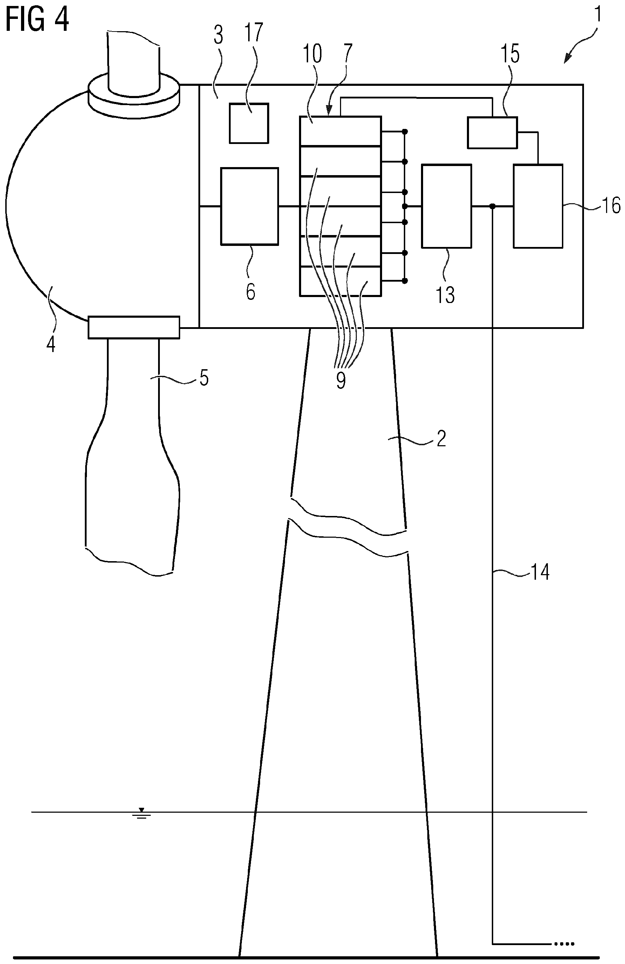

Finally, fig. 4 shows a fourth embodiment of an inventive wind turbine 1, comprising a tower 2, a nacelle 3, a hub 4 and blades 5. The hub 4 is coupled to a generator 6, which is coupled to the energy conversion device 7, which is supplied with electric energy from a generator 6. The device 7 comprises a number of energy conversion modules 9, which only convert the electrical power into hydrogen, they only work as electrolyzers. The device 7 further comprises one energy conversion device 10, which may also run in a fuel cell mode, as already previously described.

Again, a subsequent processing device 13 is coupled to the energy conversion device 10, which processing device 13 processes the hydrogen produced by the device 7 into another product by using other reactive substances, for example to produce ammonia or methane or methanol etc., which product is then fed to a product pipeline 14.

While in the embodiment of fig. 3 the transformation device 15 is fed with the product to be retransformed into hydrogen from the product pipeline 14, in the embodiment of fig. 4 an additional product storage 16 is provided, which is supplied from the processing device 13 with the gaseous or liquid product, which is stored in a pressurized state. If need be, the product is supplied from the storage 16 to the transformation device 15, which transforms the product back to produce hydrogen, which is then again fed to the energy conversion module 10, where it is converted into electric power, as the module 10 operates in the fuel cell mode.

The embodiment only shows a certain number of modules 9 and one module 10. Certainly, the module stack may also be differently scaled. The stack may comprise for example ten or fifteen modules 9, which only produce hydrogen, they are only operatable in the electrolyzer mode. Additionally, one or maybe two modules 10, which are switchable between the electrolyzer mode and the fuel cell mode, are provided, which small number is necessary and sufficient to provide the auxiliary electric power. In an alternative, also all modules may be of the reversible type, so that the stack comprises only these switchable modules and can be switched in total in its operational mode.

The respective devices like the energy conversion device 7, the subsequent processing device 13, the transformation device 15 or the respective storages 12, 16 are all shown to be incorporated in the nacelle 3. This is possible, if there is enough space. If not, it is certainly possible to arrange one or several of these items also elsewhere like on a platform outside of the nacelle 3, or even in the hollow tower 2 or its foundation, in which for example a storage, which is nothing else than a quite simple storage or tank for the gas or liquid, may be incorporated.

The figures are simple, principal illustrations, which show the relevant items in possible arrangements resp. embodiments. Certainly, the arrangement of the items may also be different to what is shown in the figures. For example, due to weight, maintenance and space confinement, the storage(s), the energy conversation device, the subsequent processing device and/or the transformation device may not be placed in the nacelle but at a platform outside of the nacelle or around, at or in the tower (e.g. at ground, a certain platform level or even in the foundation).

Finally, while the figures show an offshore wind turbine installation, the invention also refers to onshore wind turbine installations.

Although the present invention has been described in detail with reference to the preferred embodiment, the present invention is not limited by the disclosed examples from which the skilled person is able to derive other variations without departing from the scope of the invention.

## Claims

1. Wind turbine, comprising a rotor, a generator (6) driven by the rotor for producing energy, and an energy conversion device (7) comprising at least one energy conversion module (10) operatable both in an electrolyzer mode to produce hydrogen by electrolyzing water using energy provided by the generator (6) in a first operational mode of the wind turbine (1) and in a fuel cell mode to produce energy by reacting hydrogen and oxygen in a second operational mode of the wind turbine (1), wherein the energy conversion module (10) is switchable between the electrolyzer mode and the fuel cell mode.

2. Wind turbine according to claim 1, **characterized in that** the energy conversion device (7) comprises one or more energy conversion modules (9) which are operatable only in the electrolyzer mode and at least one energy conversion module (10) operatable in both modes.

3. Wind turbine according to claim 1 or 2, **characterized in that** a hydrogen storage (12) for storing at least a certain amount of hydrogen produced in the electrolyzer mode is provided, from which storage (12) the hydrogen is supplied to the energy conversion module (10) when working in the fuel cell mode.

4. Wind turbine according to claim 3, **characterized in that** the hydrogen storage (12) is provided at the wind turbine (1) .

5. Wind turbine according to claim 4, **characterized in that** a subsequent processing device (13) for processing the produced hydrogen into another product is provided.

6. Wind turbine according to claim 1 or 2, **characterized in that** the energy conversion module (10) is adapted to operate in the fuel cell mode using hydrogen produced in the electrolyzer mode from a hydrogen gas pipeline (11) coupled to the wind turbine (1).

7. Wind turbine according to claim 1 or 2, **characterized in that** a subsequent processing device (13) for processing the produced hydrogen into another product and a transformation device (15) for transforming the product back into hydrogen, which hydrogen operates the energy conversion module (10) in the fuel cell mode, is provided.

8. Wind turbine according to claim 7, **characterized in that** a product storage (16) for storing at least a certain amount of the product produced by the subsequent processing device (13) is provided, from which storage (16) the product is supplied to the transformation device (15) to produce hydrogen for operating the energy conversion module (10) in the fuel cell mode, or that the transformation device (15) is adapted to produce hydrogen using the produced product from a product gas or liquid pipeline (14) coupled to the wind turbine.

9. Wind turbine according to one of the preceding claims, **characterized in that** a control device (17) for controlling the operation of the energy conversion device (7), especially of the switchable module (10) is provided.

10. Wind turbine according to one of the preceding claims, **characterized in that** a buffer system for providing a backup power, especially for switching the switchable module (10), is provided.

11. Wind turbine according to one of the preceding claims, **characterized in that** it is an offshore arrangement or an onshore arrangement.

12. Method for operating a wind turbine having a rotor, a generator (6) driven by the rotor for producing energy, and an energy conversion device (7) comprising an energy conversion module (10), which energy conversion module (10) is operated in an electrolyzer mode producing hydrogen by electrolyzing water using energy provided by the generator (6) in a first operational mode of the wind turbine (1) and is switched to a fuel cell mode producing energy by reacting hydrogen and oxygen when the generator (6) generates no or not sufficient energy in a second operational mode of the wind turbine (1).

13. Method according to claim 12, **characterized in that** the hydrogen used in the fuel cell operational mode is provided from a hydrogen storage (12) in which at least a certain amount of hydrogen produced in the electrolyzer mode is stored, or that the hydrogen is supplied from a hydrogen pipeline (11) coupled to the wind turbine (1).

14. Method according to claim 12, **characterized in that** a subsequent processing device (13) for processing the produced hydrogen into another product and a transformation device (15) for transforming the product back into hydrogen is provided, wherein hydrogen is produced by the transformation device (15) for operating the energy conversion module (10) in the fuel cell mode.

15. Method according to claim 13, **characterized in that** at least a certain amount of the product produced by the subsequent processing device (13) is stored in a product storage (16), from which product storage (16) the product is supplied to the transformation device (15) to produce hydrogen for operating the energy conversion module (10) in the fuel cell mode, or that the product is provided via a product gas pipeline (14) coupled to the wind turbine (1) to the transformation device (15).
